(19) Europäisches Patentamt / European Patent Office / Office européen des brevets

(11) **EP 3 395 483 A1**

(12) **EUROPEAN PATENT APPLICATION**
published in accordance with Art. 153(4) EPC

(43) Date of publication:
**31.10.2018 Bulletin 2018/44**

(51) Int Cl.:
**B23B 5/38** *(2006.01)*    **B23B 1/00** *(2006.01)*
**B23B 21/00** *(2006.01)*    **B23B 25/06** *(2006.01)*
**B23B 29/32** *(2006.01)*    **B23Q 17/20** *(2006.01)*

(21) Application number: **16878203.5**

(22) Date of filing: **15.11.2016**

(86) International application number:
**PCT/JP2016/083769**

(87) International publication number:
**WO 2017/110307 (29.06.2017 Gazette 2017/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **22.12.2015 JP 2015249396**

(71) Applicant: **Murata Machinery, Ltd.
Kyoto-shi, Kyoto 601-8326 (JP)**

(72) Inventor: **ISHIHARA, Tadashi
Inuyama-shi
Aichi 484-8502 (JP)**

(74) Representative: **Zimmermann, Tankred Klaus
Schoppe, Zimmermann, Stöckeler
Zinkler, Schenk & Partner mbB
Patentanwälte
Radlkoferstrasse 2
81373 München (DE)**

(54) **MACHINE TOOL AND CUTTING METHOD**

(57)    [Problem] Provided is a machine tool and cutting method that are able to machine the inclined surface of a workpiece with high accuracy.

[Solving Means] A machine tool 100 for cutting a workpiece W having an inclined surface Wa includes a main spindle 10 that rotates while holding the workpiece W, a tool post 20 that holds a cutting tool T to cut the inclined surface Wa of the workpiece W, a mover 30 that relatively moves the workpiece W and the cutting tool T in a direction R including at least a Y-direction perpendicular to both a Z-direction parallel to an axis AX of the main spindle 10 and an X-direction that is perpendicular to the Z-direction and determines the amount of cutting of the workpiece W. The mover 30 includes a Y-direction guide 35 disposed on the tool post 20, the Y-direction guide 35 guiding movement of the cutting tool T in the Y-direction, and the Y-direction guide 35 has a guide surface 21a along a surface S2 perpendicular to a direction of a thrust force F2 that occurs when cutting the inclined surface Wa using the cutting tool T.

FIG. 1

**Description**

TECHNICAL FIELD

The present invention relates to a machine tool and a cutting method.

BACKGROUND ART

A lathe, which is one of machine tools, holds a workpiece to be machined, on a rotating spindle and performs cutting or the like on the workpiece using a cutting tool while rotating the workpiece. Examples of known machining methods using a lathe include a machining method that involves cutting the inclined surface of a workpiece while feeding a cutting tool in the direction of a tangent to the workpiece (a direction crossing a rotating spindle) (see Patent Literature 1).

Citation List

Patent Literature

[Patent Literature 1] International Publication No. 2015/079836

SUMMARY OF THE INVENTION

Technical Problem

A lathe disclosed in Patent Literature 1 cuts the inclined surface of the workpiece by feeding the cutting tool while maintaining the inclination of the cutting tool with respect to the inclined surface. However, when cutting the inclined surface while feeding the cutting tool, the cutting tool receives a thrust force in a direction perpendicular to the inclined surface. If the cutting tool is inclined by the thrust force, it would be difficult to machine the inclined surface with high accuracy.

In view of the foregoing, an object of the present invention is to provide a machine tool and a cutting method that are able to machine the inclined surface of a workpiece with high accuracy.

Solution to Problem

A machine tool of the present invention is a machine tool for cutting a workpiece having an inclined surface. The machine tool includes a main spindle that rotates while holding the workpiece, a tool post that holds a cutting tool to cut the inclined surface of the workpiece, and a mover that relatively moves the workpiece and the cutting tool in a direction including at least a Y-direction perpendicular to both a Z-direction parallel to an axis of the main spindle and an X-direction that is perpendicular to the Z-direction and determines the amount of cutting of the workpiece. The mover includes a Y-direction guide disposed on the tool post, the Y-direction guide guiding movement of the cutting tool in the Y-direction, and the Y-direction guide has a guide surface along a surface perpendicular to a direction of a thrust force that occurs when cutting the inclined surface using the cutting tool.

The guide surface may be parallel to a tangent plane to a linear portion of the inclined surface of the workpiece, the linear portion contacted by the cutting tool. The cutting tool may be mounted on a Y-direction moving object so that a direction of a cutting edge of the cutting tool is parallel to the guide surface, the Y-direction moving object moving along the Y-direction guide. The guide surface may be inclined around an axis parallel to the Y-direction and with respect to a YZ-plane parallel to the Y-direction and the Z-direction.

A machine tool of the present invention is a machine tool for cutting a workpiece having an inclined surface. The machine tool includes a main spindle that rotates while holding the workpiece, a tool post that holds a cutting tool to cut the inclined surface of the workpiece, and a mover that relatively moves the workpiece and the cutting tool in a direction including at least a Y-direction perpendicular to both a Z-direction parallel to an axis of the main spindle and an X-direction that is perpendicular to the Z-direction and determines the amount of cutting of the workpiece. The mover includes a Y-direction guide disposed on the tool post, the Y-direction guide guiding movement of the cutting tool in the Y-direction, and at least one of the main spindle and the tool post is able to rotate around an axis parallel to the Y-direction so that a guide surface of the Y-direction guide becomes perpendicular to a direction of a thrust force that occurs when cutting the inclined surface using the cutting tool.

The machine tool may include a measurement unit that measures an inclination angle of the inclined surface of the workpiece. The tool post may be a turret that holds multiple cutting tools and is able to change one of the cutting tools to another. The tool post may hold the cutting tool such that the cutting edge of the cutting tool corresponds to the inclined surface of the workpiece with a direction of the cutting edge inclined with respect to the Z-direction when seen from each of the X-direction and the Y-direction.

A cutting method of the present invention is a method for cutting a workpiece having an inclined surface. The method includes holding the workpiece on a main spindle and rotating the workpiece around the main spindle, causing a cutting tool held by a tool post to correspond to the inclined surface of the workpiece, and cutting the inclined surface by moving the cutting tool relative to the workpiece in a direction including at least a Y-direction perpendicular to both a Z-direction parallel to an axis of the main spindle and an X-direction that is perpendicular to the Z-direction and determines the amount of cutting of the workpiece. The cutting tool is caused to correspond to the inclined surface of the workpiece by rotating at least one of the main spindle and the tool post around an axis parallel to the Y-direction.

The cutting method includes measuring an inclination angle of the inclined surface after cutting the inclined surface, making an adjustment to a rotation position of at least one of the main spindle and the tool post depending on a measurement result, and cutting the inclined surface using the cutting tool after the adjustment.

Advantageous Effects of the Invention

According to the machine tool of the present invention, when cutting the inclined surface by moving the cutting tool, the guide surface can reliably receive the thrust force acting on the cutting tool. Thus, inclination of the cutting tool by reception of the thrust force can be suppressed, allowing for high-accuracy machining of the inclined surface of the workpiece.

If the guide surface is parallel to the tangent plane to the linear portion of the inclined surface of the workpiece, which is contacted by the cutting tool, the direction of the thrust force acting on the cutting tool and the guide surface can be reliably set so as to be perpendicular to each other. Thus, inclination of the cutting tool can be reliably suppressed. If the cutting tool is mounted on the Y-direction moving object so that the direction of a cutting edge of the cutting tool is parallel to the guide surface, the Y-direction moving object moving along the Y-direction guide, the guide surface of the Y-direction guide can reliably receive the thrust force acting on the cutting tool through the Y-direction moving object. If the guide surface is inclined around the axis parallel to the Y-direction with respect to the YZ-plane parallel to the Y-direction and the Z-direction, the guide surface can be disposed so as to be perpendicular to the direction of the thrust force, without changing the inclination of the main spindle.

According to the machine tool of the present invention, at least one of the main spindle and the tool post is rotated such that the guide surface of the Y-direction guide becomes perpendicular to the direction of the thrust force that occurs on the cutting tool. Thus, while the workpiece is cut, inclination of the cutting tool by reception of the thrust force can be suppressed, allowing for accurate machining of the inclined surface of the workpiece. Also, the inclined surface can be cut by moving the cutting tool in the Y- and Z-directions, without having to move the main spindle and the cutting tool in the X-direction. Thus, movement control of the main spindle or cutting tool can be simplified. Also, this simultaneous two-axis (Y- and Z-directions) machining allows for more accurate machining of the inclined surface than simultaneous, diagonal three-axis (X-, Y-, and Z-directions) machining. Also, by rotating at least one of the main spindle and the cutting tool around the axis parallel to the Y-direction, the angle of the inclined surface can be easily changed and then the inclined surface can be cut.

If the machine tool includes the measurement unit that measures the inclination angle of the inclined surface of the workpiece, the inclination angle measured by the measurement unit is checked. This allows for easy checking of whether an inclined surface having a desired angle has been formed and further allows for adjustment of the rotation position of at least one of the main spindle and the tool post on the basis of the measurement result. If the tool post is the turret that holds multiple cutting tools and is able to change one of the cutting tools to another, the same or different cutting tools are held by the turret. Thus, the time and effort to replace the cutting tool can be omitted. If the tool post holds the cutting tool such that the cutting edge of the cutting tool corresponds to the inclined surface of the workpiece with the direction of the cutting edge inclined with respect to the Z-direction when seen from each of the X-direction and the Y-direction, the edge of the cutting tool smoothly cuts into the workpiece when the workpiece and the cutting tool are relatively moved in the Y-direction. Thus, it is possible to suppress unwanted vibration of the workpiece and to improve the surface roughness of the machined surface of the workpiece.

According to the cutting method of the present invention, inclination of the moving cutting tool by reception of the thrust force can be suppressed, allowing for high-accuracy machining of the inclined surface of the workpiece. Also, the inclined surface can be cut by moving the cutting tool in the Y- and Z-directions, without having to move the main spindle and the cutting tool in the X-direction. This allows for simplification of feeding control of the cutting tool. Also, this simultaneous two-axis (Y- and Z-directions) machining allows for more accurate machining of the inclined surface than simultaneous, diagonal three-axis (X-, Y-, and Z-directions) machining. Also, the rotation position of at least one of the main spindle and the tool post is adjusted on the basis of the measured inclination angle of the inclined surface and then the inclined surface is cut. Thus, an inclined surface having a desired inclination angle can be reliably formed.

BRIEF DESCRIPTION OF DRAWINGS

FIG. 1 is a drawing showing an example of a machine tool of a first embodiment.
FIG. 2 is a drawing showing the inclined surface of a workpiece W and a part of a tool post.
FIG. 3(A) shows the direction of the cutting edge of a cutting tool with respect to a Z-direction, FIG. 3(B) shows operation of the cutting tool when the workpiece is seen from the Z-direction, and FIG. 3(C) shows operation of the cutting tool when the workpiece is seen from an X direction.
FIG. 4 is a drawing showing an example of a machine tool of a second embodiment.
FIGS. 5(A) and 5(B) are drawings showing an example of a cutting operation of the machine tool shown in FIG. 4.
FIG. 6(A) is a drawing showing a state in which the rotation position of a rotary table of the machine tool shown in FIG. 4 has been adjusted, and FIG. 6(B) is a drawing showing a state in which a workpiece has been cut after the adjustment.

FIG. 7 is a drawing showing an example of a machine tool of a third embodiment.

FIG. 8 is a drawing showing another example of a tool post.

DESCRIPTION OF EMBODIMENTS

Now, embodiments of the present invention will be described with reference to the drawings. However, the present invention is not limited thereto. To clarify the embodiments, the drawings are scaled as necessary, for example, partially enlarged or highlighted. In the drawings, directions are shown by an XYZ coordinate system. Throughout the embodiments below, the rotation-axis direction of a main spindle in the XYZ coordinate system is referred to as a Z-direction.

In a first embodiment, a plane parallel to a horizontal plane is referred to as a YZ-plane, and a direction perpendicular to the Z-direction is referred to as a Y-direction. The direction perpendicular to the YZ-plane is referred to as an X-direction. In the embodiments, the X-axis is a direction that is perpendicular to the Z-direction and determines the amount of cutting of a workpiece. In the drawings, the directions of arrows are positive directions of the X-, Y-, and Z-directions, and directions opposite to those of the arrows are the negative directions thereof. Also, in the embodiments, the direction around a Y-axis is referred to as a $\theta$Y-direction, and the direction around a Z-axis is referred to as a $\theta$Z-direction. The clockwise directions of the $\theta$Y- and $\theta$Z-directions seen from the positive Y- and Z-sides are referred to as the positive directions thereof, and the counterclockwise directions thereof are referred to as the negative directions thereof. An axis around the Y-axis may be called B-axis, and an axis around the Z-axis may be called as C-axis.

<First Embodiment>

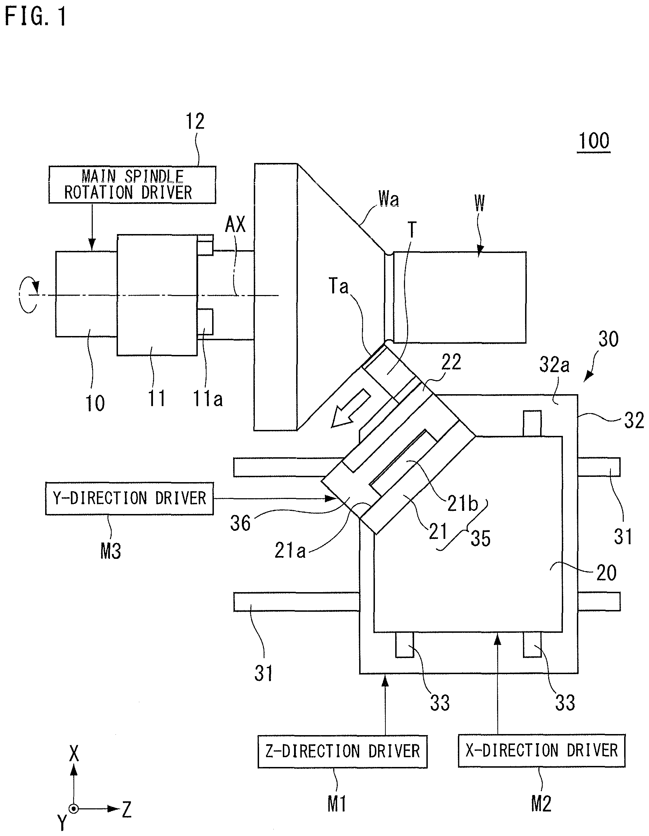

A machine tool 100 of a first embodiment will be described. FIG. 1 is a drawing showing an example of the machine tool 100 of the first embodiment. The machine tool 100 is a lathe that cuts a workpiece W having an inclined surface Wa, and FIG. 1 shows a major part of the lathe. In FIG. 1, the positive Y-side of the machine tool 100 is the front side thereof, and the negative Y-side thereof is the back side thereof. The positive and negative Z-sides of the machine tool 100 are the lateral sides thereof, and the Z-direction represents the left-right direction of the machine tool 100. As shown in FIG. 1, the machine tool 100 includes a main spindle 10, a tool post 20, and a mover 30. The main spindle 10, the tool post 20, and the mover 30 are disposed, for example, in a frame (not shown) serving as the cabinet of the machine tool 100.

While the main spindle 10 is disposed in the frame (not shown), it may be disposed so as to be movable in the Z-direction, the X-direction, the Y-direction, and/or the like. The positive Z-side end of the main spindle 10 is provided with a chuck driver 11. The main spindle 10 is supported by a bearing or the like (not shown) so as to be rotatable in the $\theta$Z-direction around an axis AX parallel to the Z-direction. The main spindle 10 is rotationally driven by a main spindle rotation driver 12. The main spindle rotation driver 12 includes, for example, a motor and a drive transmitter that transmits the rotation of the motor to the main spindle 10.

The chuck driver 11 includes multiple grasping claws 11a that hold the workpiece W. The grasping claws 11a are able to move in the radial direction of the main spindle 10. The chuck driver 11 moves the grasping claws 11a in the radial direction of the main spindle 10 so that the grasping claws 11a hold the workpiece W. The grasping claws 11a are disposed around the rotation axis of the main spindle 10 at equal intervals. The number or shape of the grasping claws 11a may be any number or shape as long as they can hold the workpiece W.

The workpiece W has a cylindrical shape whose part is a tapered inclined surface Wa. The diameter of the inclined surface Wa is gradually reduced from a portion close to the main spindle 10 toward the positive Z-side. The form of the workpiece W need not be that shown in FIG. 1. For example, the inclination angle with respect to the axis AX may be larger or smaller than that of the workpiece W shown in FIG. 1. Alternatively, the diameter of the inclined surface Wa may be gradually increased from a portion close to the main spindle 10 toward the positive Z-side. The workpiece W may also have multiple inclined surfaces Wa. The workpiece W may also have an inclined surface whose inclination angle changes partway.

The mover 30 moves the tool post 20 in the Z-direction, which is parallel to the axis AX of the main spindle 10, the X-direction, which is perpendicular to the Z-direction and determines the amount of cutting of the workpiece W, the Y-direction, which is perpendicular to both the Z-direction and the X-direction, and a direction obtained by combining two or more of the X-, Y-, and Z-directions. The mover 30 includes Z-direction guides 31, a Z-direction moving table 32, X-direction guides 33, a Y-direction guide 35 formed on the tool post 20, and a Y-direction moving object 36. The Z-direction guides 31 are disposed in the Z-direction in the frame (not shown). The Z-direction moving table 32 is in the shape of a rectangular plate or the like, is disposed on the Z-direction guides 31, and is able to move in the Z-direction along the Z-direction guides 31. The Z-direction moving table 32 is moved in the Z-direction by activating a Z-direction driver M1 and held in a predetermined position. The Z-direction driver M1 is, for example, an electric motor or hydraulic system.

The X-direction guides 33 are disposed on the positive Y-side surface 32a of the Z-direction moving table 32 so as to extend in the X-direction. The tool post 20 is in the shape of a rectangular block or the like and is disposed on the X-direction guides 33. The tool post 20 is able to move in the X-direction along the X-direction guides 33. The tool post 20 is moved in the X-direction by activating an X-direction driver M2 and held in a predetermined position.

The X-direction driver M2 is, for example, an electric motor or hydraulic system.

The Y-direction guide 35 and the Y-direction moving object 36 are disposed on the tool post 20. The Y-direction guide 35 and the Y-direction moving object 36 are disposed, for example, on the negative Z-side and positive X-side corner of the four corners of the tool post 20 seen from the positive Y-direction. The Y-direction guide 35 includes a guide base 21 and a protrusion 21b that protrudes from a guide surface 21a of the guide base 21 and extends in the Y-direction. The Y-direction guide 35 is fastened to the tool post 20 using a fastening member such as a bolt.

The Y-direction guide 35 has the guide surface 21a on both sides of the protrusion 21b on the guide base 21. The configuration of the guide surface 21a will be described later. The Y-direction moving object 36 is able to move in the Y-direction along the Y-direction guide 35. The range in which the Y-direction moving object 36 moves in the Y-direction is set in accordance with the Y-direction length of the cutting edge Ta of a cutting tool T. The Y-direction moving object 36 is moved in the Y-direction by activating a Y-direction driver M3 and held in a predetermined position. The Y-direction driver M3 is, for example, an electric motor or hydraulic system. To prevent the Y-direction moving object 36 from being detached from the Y-direction guide 35 (protrusion 21b), the Y-direction moving object 36 may be provided with a detachment prevention structure (not shown) such as a dovetail structure.

The Y-direction moving object 36 includes a holder 22 that holds the cutting tool T. The holder 22 is fastened to the Y-direction moving object 36 using a fastening member such as a bolt. The holder 22 replaceably holds the cutting tool T. The cutting tool T has the linear cutting edge Ta to cut the workpiece W.

While, in the machine tool 100 of the present embodiment, the cutting tool T is disposed on the negative X-side of the workpiece W, it may be disposed on the positive X-side thereof. Alternatively, cutting tools T may be disposed on both the negative X- and positive X-sides of the workpiece W. The workpiece W is cut using the cutting tool T under the control of a controller (not shown). If cutting tools T are disposed on the negative X- and positive X-sides of the workpiece W, the inclined surface Wa of the workpiece W may be cut using either cutting tool T, or using both alternately or simultaneously.

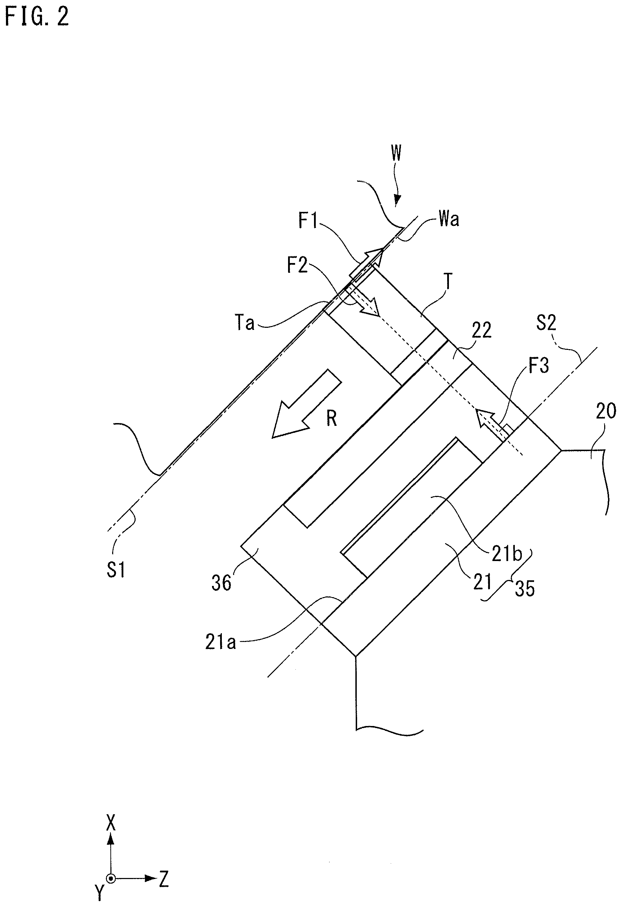

FIG. 2 is a drawing showing the inclined surface Wa of the workpiece W and a part of the tool post 20. FIG. 2 shows a state in which the linear cutting edge Ta of the cutting tool T is in contact with the inclined surface Wa of the workpiece W. As shown in FIG. 2, the inclined surface Wa of the workpiece W is cut, for example, by moving the cutting tool T in the direction of an arrow in FIG. 2 with the cutting edge Ta in contact with the inclined surface Wa. During the cutting, a feed force F1 and a thrust force F2 act on the cutting tool T. The feed force F1 acts in a direction opposite to the movement direction of the cutting tool T. The thrust force F2 acts in a direction perpendicular to the movement direction of the cutting tool T. Accordingly, the thrust force F2 acts in a direction perpendicular to a tangent plane S1 to a linear portion of the inclined surface Wa, the linear portion contacted by the cutting edge Ta of the cutting tool T.

The guide surface 21a of the Y-direction guide 35 is flat, and a surface S2 including the guide surface 21a is disposed parallel to the tangent plane S1. Accordingly, the direction of the thrust force F2 is perpendicular to the surface S2 and therefore the guide surface 21a is perpendicular to the direction of the thrust force F2. Since the guide surface 21a is perpendicular to the thrust force F2, an opposite reaction force F3 to the thrust force F2 occurs from the guide surface 21a. Thus, the guide surface 21a can receive the thrust force F2 properly. While the inclined surface Wa is cut using the cutting tool T, inclination of the cutting tool T by reception of the thrust force F2 is suppressed, allowing for high-accuracy machining. Also, the guide surface 21a is inclined in the $\theta$Y-direction with respect to the YZ-plane parallel to the Y-direction and the Z-direction. Thus, the guide surface 21a is disposed perpendicular to the direction of the thrust force F2 without having to change a state in which the axis AX of the main spindle 10 (see FIG. 1) is parallel to a horizontal plane.

The cutting tool T is mounted on the holder 22 such that the direction of the cutting edge Ta is parallel to the guide surface 21a or tangent plane S1. For this reason, even if the cutting tool T is moved in the Y-direction, the inclined surface Wa is cut in a constant amount. Also, the thrust force F2 acting on the cutting edge Ta perpendicularly acts on the guide surface 21a through the cutting tool T. Note that the cutting tool T is disposed with the direction of the cutting edge Ta inclined with respect to the Z-direction when seen from each of the X-direction and the Y-direction. Due to this configuration, when the workpiece W and the cutting tool T are moved relatively in the Y-direction, the inclined surface Wa of the workpiece W can be smoothly cut using the cutting edge Ta of the cutting tool T. Thus, unnecessary vibration of the workpiece W is suppressed, increasing the accuracy with which the inclined surface Wa is machined.

Operation of the machine tool 100 thus configured will be described. First, as shown in FIG. 1, when the chuck driver 11 is driven, the workpiece W to be machined is held on the main spindle 10 by the grasping claws 11a. After holding the workpiece W, the main spindle rotation driver 12 is activated, thereby rotating the main spindle 10 and thus rotating the workpiece W in the $\theta$Z-direction. The speed of rotation of the workpiece W is set in accordance with the machining process as appropriate.

Then, the position of the cutting tool T is adjusted. In this adjustment, the tool post 20 is moved in the X- and Z-directions so that the cutting edge Ta of the cutting tool T corresponds to the inclined surface Wa of the workpiece W. The tool post 20 is moved in the X-direction by the X-direction driver M2 and moved in the Z-direction by the Z-direction driver M1. The X-direction position of the cutting edge Ta determines the amount of cutting of the inclined surface Wa of the workpiece W. The amount of cutting may be set to a predetermined value by the controller (not shown), or may be set manually by the operator.

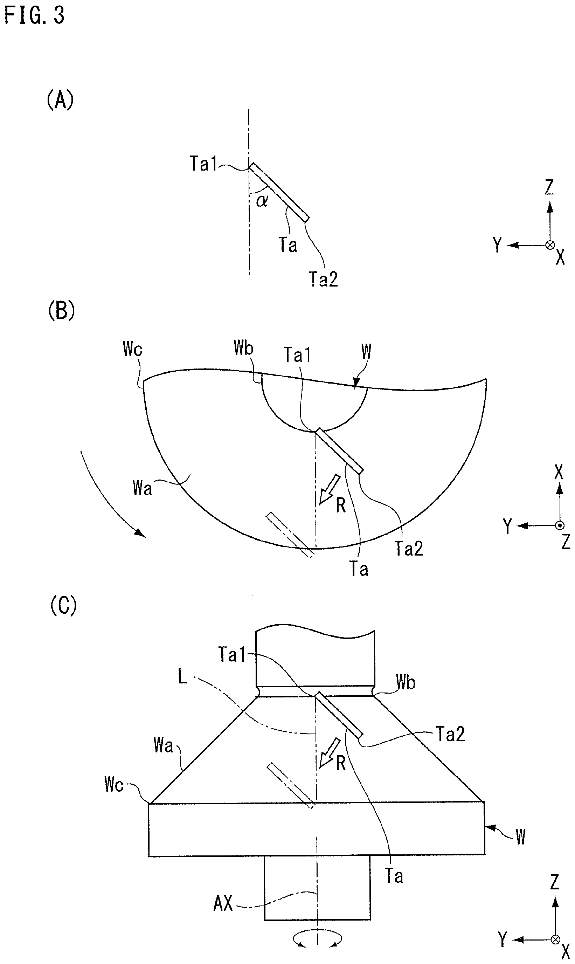

FIG. 3 includes drawings showing the cutting edge Ta of the cutting tool T, in which FIG. 3(A) shows the direction of the cutting edge Ta of the cutting tool T with respect to the Z-direction, FIG. 3(B) shows operation of the cutting edge Ta of the cutting tool T when the inclined surface Wa of the workpiece W is seen from the Z-direction, and FIG. 3(C) shows the operation of the cutting edge Ta of the cutting tool T when the inclined surface Wa of the workpiece W is seen from the X-direction. As shown in FIG. 3(A), the cutting tool T is set such that the cutting edge Ta forms an angle $\alpha$ with the Z-axis. Accordingly, when the cutting edge Ta is moved from the negative Y-side to the positive Y-side of the workpiece W, a positive Z-side, first end Ta1 of the cutting edge Ta contacts the workpiece W first.

Then, as shown in FIGS. 3(B) and 3(C), the inclined surface Wa is cut by moving the cutting edge Ta in a movement direction R, which is a combination direction obtained by combining the X-, Y-, and Z-directions. The movement direction R is a trajectory along the tangent plane S1 (see FIG. 2) to the inclined surface Wa of the workpiece W.

First, the first end Ta1 of the positive Z-side of the cutting edge Ta contacts a small diameter portion Wb (a portion that is the positive Z-side end and has the smallest diameter) of the inclined surface Wa, so the inclined surface Wa is cut by the first end Ta1. Then, the cutting edge Ta is moved in the movement direction R along the inclined surface Wa. Thus, the cut portion of the workpiece W is gradually shifted from the first end Th1 toward a second end Th2 in the negative Z-direction. As seen above, while the cutting edge Ta moves in the Y-direction, the inclined surface Wa of the workpiece W moves in the Z-direction with the cutting edge Ta in contact with the inclined surface Wa along a straight line L.

When the second end Ta2 of the cutting edge Ta reaches a large diameter portion Wc (a portion that is the negative Z-side end and has the largest diameter) of the inclined surface Wa, the cutting of the inclined surface Wa is complete. While, in the present invention, the inclined surface Wa is cut using the entire cutting edge Ta from the first end Ta1 to the second end Ta2, the inclined surface Wa may be cut using a part of the cutting edge Ta. While the cutting edge Ta travels along the straight line L, it moves in the Z-direction, as well as in the X-direction. Although the cutting edge Ta also moves in the Y-direction, the amount of movement involved in the cutting is equal to the Y-direction distance from the first end Ta1 to the second end Ta2. Accordingly, as shown in FIG. 3(A), the amount of movement of the cutting edge Ta in the Y-direction varies with the angle $\alpha$ of the cutting edge Ta with respect to the Z-direction or the length of the cutting edge Ta from the first end Ta1 to the second end Ta2. For example, if the angle of the cutting edge Ta is made larger than $\alpha$ or if the cutting edge Ta is made longer, the amount of movement of the cutting edge Ta in the Y-direction when cutting the inclined surface Wa is increased compared to that shown in FIG. 3.

While, in the present embodiment, the cutting edge Ta is moved in the movement direction R at a constant X-direction speed, a constant Y-direction speed, and a constant Z-direction speed, the X-direction, Y-direction, and Z-direction speeds need not be constant. For example, the Y-direction speed may be increased on the small diameter portion Wb and may be reduced as the cutting edge Ta approaches the large diameter portion Wc. In this case, the movement direction R is changed while the inclined surface Wa is cut. Further, the desired inclined surface Wa may be cut by changing the Z-direction speed or X-direction speed in accordance with the changes in the Y-direction moving speed.

The moving speed may be changed without changing the movement direction R. When cutting the workpiece W, the relationship between the amount of movement per unit rotation (feed rate) f, the distance (radius) r from the rotation center to the cut portion, and the surface accuracy t of the cut inclined surface Wa is represented by the following formula:

$$t = f^2/8r.$$

Accordingly, if the feed rate f is constant, a cut portion having a large radius has a high surface accuracy t, and a cut portion having a small radius has a low surface accuracy t. For this reason, for example, the feed rate f may be changed in accordance with the radius r of the cut portion so that the surface accuracy t becomes constant. Also, in the inclined surface Wa, the small diameter portion Wb has a smaller radius than the large diameter portion Wc. For this reason, the small diameter portion Wb may be cut at a lower feed rate f, and the large diameter portion Wc may be cut at a higher feed rate f. Thus, the surface accuracy t of the inclined surface Wa can be made uniform in the radial direction.

When cutting the workpiece W is complete, the workpiece W held by the grasping claws 11a is released and then carried out of the machining area of the machine tool 100 by a workpiece transporter (not shown). The release of the workpiece W by the grasping claws 11a and the carry-out thereof by the workpiece transporter may be performed, for example, in accordance with an instruction from the controller (not shown), or manually by the operator. Note that if the operations from the carry-in of the workpiece W to the carry-out thereof are performed under the control of the controller (not shown), the above cutting operation can be automatically performed. In this case, a part of the cutting operation may be performed manually rather than performing the entire cutting process automatically.

As seen above, according to the machine tool 100 of the present embodiment, while the inclined surface Wa is cut by moving the cutting tool T, the guide surface 21a can properly receive the thrust force F2 acting on the cutting tool T. Thus, inclination of the cutting tool T by reception of the thrust force F2 is suppressed during the movement of the cutting tool T, allowing for high-accuracy machining of the inclined surface Wa of the workpiece W.

<Second Embodiment>

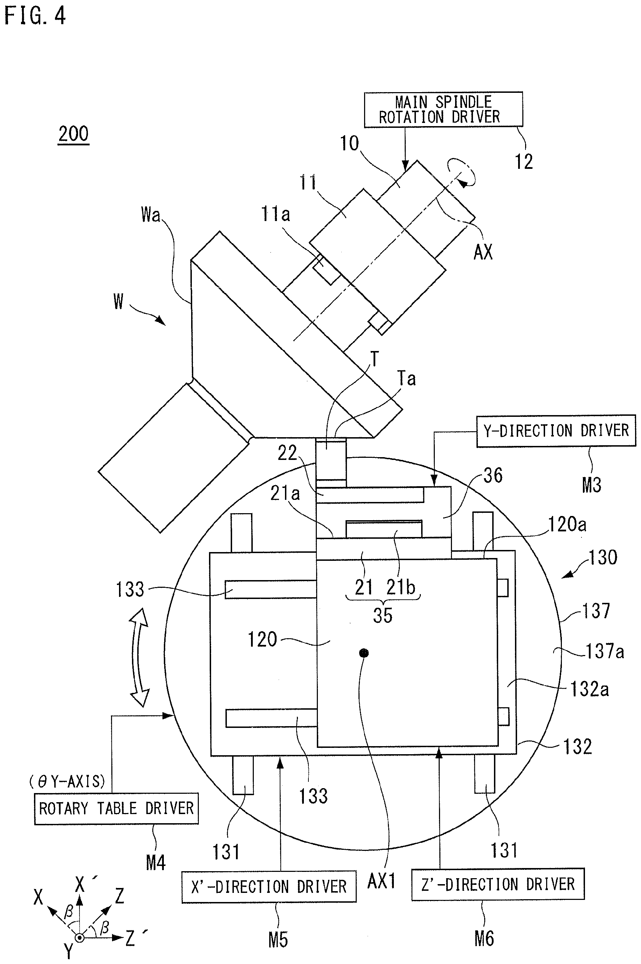

A machine tool 200 of a second embodiment will be described. In the present embodiment, elements similar to those of the first embodiment are given the same reference signs, and description thereof will be simplified or omitted. FIG. 4 is a drawing showing an example of the machine tool 200 of the second embodiment. As in the first embodiment, the machine tool 200 is a lathe that cuts a workpiece W having an inclined surface Wa, and FIG. 4 shows a major part of the lathe.

As shown in FIG. 4, the machine tool 200 includes a main spindle 10, a tool post 120, and a mover 130. The main spindle 10, the tool post 120, and the mover 130 are disposed, for example, in a frame (not shown) serving as the cabinet of the machine tool 200. The machine tool 200 is set such that the axis AX of the main spindle 10 is inclined in the negative 9Y-direction with respect to a horizontal plane by an angle β. For this reason, in the description of the second embodiment, a direction inclined in the positive θY-direction with respect to the Z-direction by the angle β is referred to as a Z'-direction, and a direction inclined in the positive θY-direction with respect to the X-direction by the angle β is referred to as an X'-direction. A plane including the Z'-direction and the Y-direction is a horizontal plane, and the X'-direction is a direction perpendicular to the horizontal plane.

The mover 130 is able to move the tool post 120 in the X'-, Y-, and Z'-directions. The mover 130 includes a rotary table 137 and thus is able to rotate the tool post 120 in the θY-direction. The rotary table 137 is disposed so as to be rotatable in the θY-direction around an axis AX1 parallel to the Y-direction. A rotary table driver M4 rotationally drives the rotary table 137 in the θY-direction. The rotary table driver M4 includes, for example, a motor and a transmitter that transmits the rotation of the motor to the rotary table 137.

The mover 130 also includes X'-direction guides 131, an X'-direction moving table 132, Z'-direction guides 133, a Y-direction guide 35 formed on the tool post 120, and a Y-direction moving object 36. The X'-direction guides 131 are disposed on the positive Y-side surface 137a of the moving table 137 so as to extend in the X'-direction. The X'-direction moving table 132 is in the shape of a rectangular plate and is disposed on the X'-direction guides 131. The X'-direction moving table 132 is moved in the X'-direction along the X'-direction guide 131 by activating an X'-direction driver M5 and held in a predetermined position.
The X'-direction driver M5 is, for example, an electric motor or a hydraulic system.

The Z'-direction guides 133 are disposed on the positive Y-side surface 132a of the X'-direction moving table 132 so as to extend in the Z'-direction. The tool post 120 is in the shape of a rectangular block or the like and is disposed on the Z'-direction guides 133. The tool post 120 is moved in the Z'-direction along the Z'-direction guides 133 by activating a Z'-direction driver M6 and held in a predetermined position. The Z'-direction driver M6 is, for example, an electric motor or a hydraulic system.

The Y-direction guide 35 and the Y-direction moving object 36 are disposed on the tool post 120. The tool post 120 is fixed to a Z'-direction moving object 134. The Y-direction guide 35 and the Y-direction moving object 36 are disposed on the positive X'-side surface 120a of the tool post 120 when the tool post 120 is seen from the positive Y-direction. The surface 120a is a plane parallel to a horizontal plane. The Y-direction guide 35 is fastened to the tool post 120 using a fastening member such as a bolt.

The configurations of the Y-direction guide 35 and the Y-direction moving object 36 are similar to those shown in FIG. 1. A cutting tool T is held by a holder 22 included in the Y-direction moving object 36. The Y-direction moving object 36 is moved in the Y-direction by activating a Y-direction driver M3 and held in a predetermined position. A guide surface 21a of the Y-direction guide 35 is parallel to a YZ'plane, which is a horizontal plane. As in the first embodiment, the guide surface 21a is disposed parallel to a tangent plane S1 (see FIG. 2) to a linear position contacted by the cutting edge Ta of the cutting tool T, of the inclined surface Wa. Accordingly, the guide surface 21a is perpendicular to a thrust force F2 (see FIG. 2) acting on the cutting tool T. As in the first embodiment, an opposite reaction force F3 (see FIG. 2) to the thrust force F2 occurs from the guide surface 21a, allowing the guide surface 21a to properly receive the thrust force F2. Thus, while the inclined surface Wa is cut using the cutting tool T, inclination of the cutting tool T by reception of the thrust force F2 is suppressed, allowing for high-accuracy machining. As in the first embodiment, the cutting tool T is mounted on the holder 22 such that the direction of the cutting edge Ta is parallel to the guide surface 21a, that is, the tangent plane S1.

By rotating the rotary table 137, the mover 130 rotates the X'-direction moving table 132 and the tool post 120 integrally in the $\theta$Y-direction (around the $\theta$Y-axis or around the B-axis). The rotation of the tool post 120 in the $\theta$Y-direction causes the cutting tool T held by the Y-direction moving object 36 to rotationally move in the $\theta$Y-direction integrally with the tool post 120. The rotational movement of the cutting tool T in the $\theta$Y-direction changes the inclination of the cutting edge Ta. As seen above, the mover 130 is able to adjust the inclination of the cutting edge Ta by adjusting the rotation position of the rotary table 137, thereby easily aligning the inclination of the cutting edge Ta with the direction of the inclined surface Wa.

Also, by rotating the rotary table 137, the movement direction of the X'-direction moving table 132 and the Z'-direction moving object 134 is inclined in the $\theta$Y-direction. That is, the mover 130 is able to change the movement direction of the cutting tool T by adjusting the rotation position of the rotary table 137.

Operation of the machine tool 200 will be described with reference to the drawings. First, as in the first embodiment, the main spindle 10 is caused to hold the workpiece W to be machined and then to rotate around the axis AX so that the workpiece W rotates around the main spindle (around the axis AX). Then, the position of the cutting tool T in the X-direction is adjusted. In this adjustment, the X'-direction driver M5 is activated to move the tool post 120 in the X'-direction so that the cutting edge Ta of the cutting tool T corresponds to the inclined surface Wa of the workpiece W. The X'-direction position of the cutting edge Ta determines the amount of cutting of the workpiece W. The amount of cutting may be set to a predetermined value by a controller (not shown), or may be set manually by the operator.

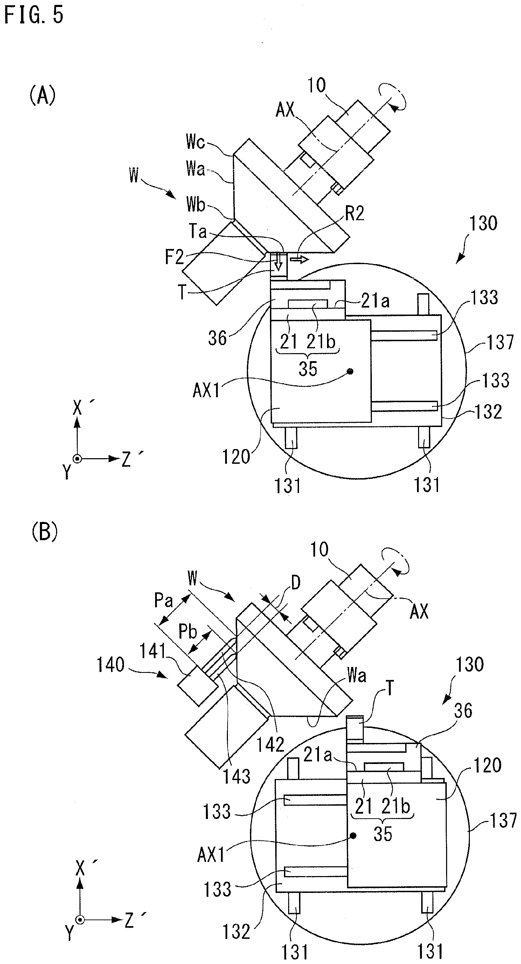

FIG. 5 includes drawings showing an example of a cutting operation of the machine tool 200 shown in FIG. 4. As shown in FIG. 5(A), the inclined surface Wa is cut by moving the cutting tool T in a movement direction R2 obtained by combing the Z'-direction parallel to the inclined surface Wa of the workpiece W and the Y-direction perpendicular to the Z'-direction. In the second embodiment, the cutting tool T is moved simultaneously in two-axis directions, that is, the Z'-direction and the Y-direction. Thus, the workpiece W can be machined more accurately than when moving the cutting tool T simultaneously in three-axis directions, that is, the X-direction, the Y-direction, and the Z-direction, and movement control can be easily performed. Also, the guide surface 21a is perpendicular to the direction of the thrust force F2 acting on the cutting tool T, allowing the guide surface 21a to receive the thrust force F2 properly. Thus, during the cutting, inclination of the cutting tool T by reception of the thrust force F2 is suppressed, allowing for high-accuracy machining of the inclined surface Wa.

After cutting the inclined surface Wa, the inclination angle of the inclined surface Wa is measured using a measurement unit 140, as shown in FIG. 5(B). The measurement unit 140 includes a base 141 and two probes 142, 143. The two probes 142, 143 are disposed so as to protrude in a direction parallel to the axis AX from the base 141. The probes 142, 143 are disposed at an interval D.

When measuring the inclination angle of the inclined surface Wa, the probes 142, 143 are caused to protrude from the reference positions thereof so that the front ends thereof contact the inclined surface Wa. The inclination angle of the inclined surface Wa can be calculated by obtaining the value of (Pa-Pb)/D where Pa represents the amount of protrusion of the probe 142; Pb represents the amount of protrusion of the probe 143; and Pa>Pb. While, in the present embodiment, the measurement unit 140 measures the inclination angle of the inclined surface Wa by contacting the inclined surface Wa, the inclination angle may be measured using another method. For example, the inclined surface of the inclined surface Wa may be measured contactlessly using an optical sensor or the like.

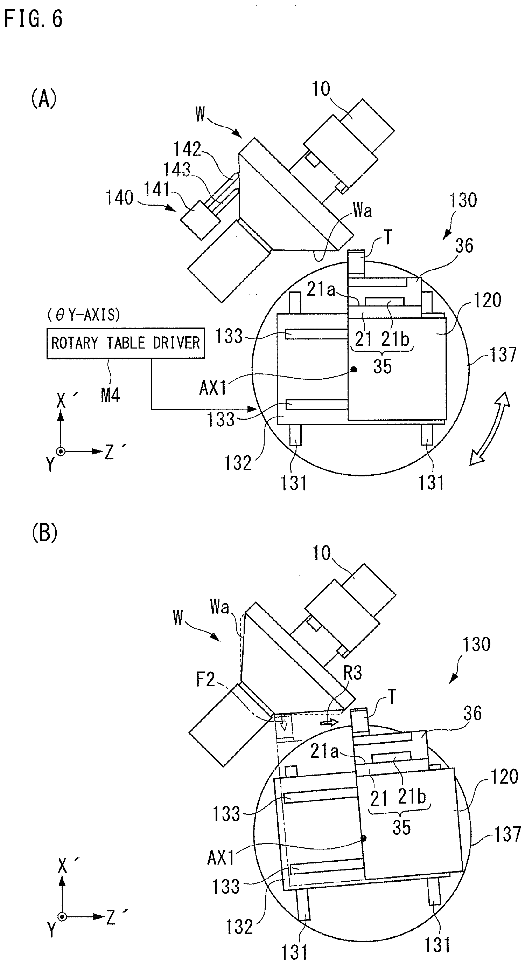

If it is determined on the basis of the measurement result of the measurement unit 140 that the inclination angle of the inclined surface Wa is a desired inclination angle, cutting the workpiece W is complete. On the other hand, if the inclination angle (the angle with respect to the axis AX) of the inclined surface Wa deviates from the desired value, the inclination of the cutting edge Ta is changed and then the workpiece W is cut again. In this case, as shown in FIG. 6(A), the rotation position of the tool post 120 is adjusted in accordance with the measurement result of the measurement unit 140. For example, if the measurement result is greater than the desired inclination angle and it is determined that the amount of cutting has to be increased, the rotary table 137 is rotated in the negative $\theta$Y-direction by activating the rotary table driver M4.

Thus, the inclination of the cutting edge Ta of the cutting tool T is adjusted so that the inclined surface Wa can be cut more deeply. As seen above, use of the measurement result of the measurement unit 140 allows for easy checking of whether an inclined surface Wa having the desired inclination angle has been formed and further allows for adjustment of the rotation position of the rotary table 137 on the basis of the measurement result. Measurement of the inclined surface Wa by the measurement unit 140, the rotation of the rotary table 137, or the like may be controlled by the controller (not shown), or may be controlled manually by the user.

After adjusting the inclination of the cutting edge Ta, the inclined surface Wa is cut again. Since the rotary table 137 has been rotated, the X'- and Z'-directions have been inclined by the amount of rotation $\theta$Y of the rotary table 137. In the description below, the X'-direction inclined by the amount of rotation $\theta$Y is referred to as an X'+$\theta$Y-direction, and the Z'-direction inclined by the amount of rotation $\theta$Y is referred to as a Z'+$\theta$Y-direction. As shown in FIG. 6(B), after adjusting the position of the cutting tool T in the X'+$\theta$Y-direction, the inclined surface Wa is cut by moving the cutting tool T in a movement direction R3 obtained by combining the Z'+$\theta$Y-direction

along the Z'-direction guides 133 and the Y-direction. Thus, the inclination of the inclined surface Wa becomes greater than the inclination after the first cutting (a broken-line portion in FIG. 6(B)). In this case also, the guide surface 21a is perpendicular to the direction of the thrust force F2 acting on the cutting tool T, allowing the guide surface 21a to receive the thrust force F2 properly. Thus, during cutting, inclination of the cutting tool T by reception of the thrust force F2 is suppressed, allowing for high-accuracy machining.

Then, the inclination angle of the inclined surface Wa is measured again using the measurement unit 140. If the inclination angle of the inclined surface Wa is the desired inclination angle, cutting the workpiece W is complete. On the other hand, if the inclination angle of the inclined surface Wa deviates from the desired inclination angle, the inclination of the cutting edge Ta is changed and then the inclined surface Wa is cut again, as described above.

As seen above, according to the second embodiment, the rotary table 137 is rotated, thereby allowing the direction of the cutting edge Ta of the cutting tool T to be easily aligned with the direction of the inclined surface Wa. Also, even if the rotary table 137 is rotated, the guide surface 21a properly receives the thrust force F2 acting on the cutting tool T. Thus, during the cutting, inclination of the cutting tool T by reception of the thrust force F2 is suppressed, allowing for high-accuracy machining of the inclined surface Wa of the workpiece W. Also, the inclination angle is measured using the measurement unit 140, thereby allowing for reliable formation of an inclined surface Wa having a desired inclination angle.

Also, in the second embodiment, if the measurement result of the inclined surface Wa by the measurement unit 140 is the desired angle, the inclined surface Wa may be cut again without rotating the rotary table 137. In this case, the movement speed of the cutting tool T may be changed so that the first cutting is coarse cutting and the second cutting is finish cutting. The measurement unit 140 may be disposed optionally. That is, the measurement unit 140 need not be disposed.

<Third Embodiment>

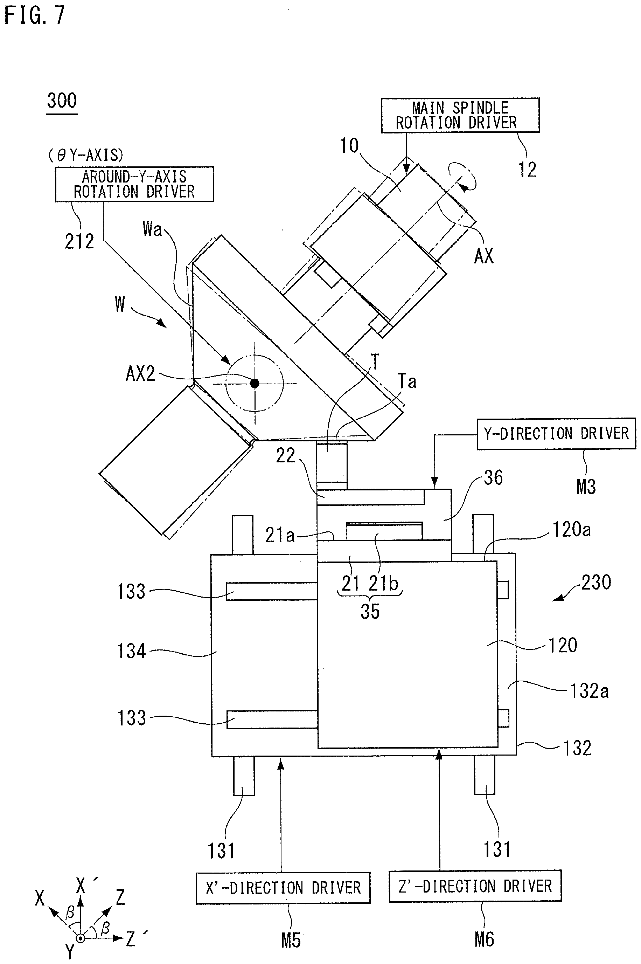

A machine tool 300 of a third embodiment will be described. In the third embodiment, elements similar to those of the first and second embodiments are given the same reference signs, and description thereof will be simplified or omitted. FIG. 7 is a drawing showing an example of the machine tool 300 of the third embodiment. As in the first and second embodiments, the machine tool 300 is a lathe that cuts a workpiece W having an inclined surface Wa, and FIG. 7 shows a major part of the lathe.

In the second embodiment, the cutting tool T (tool post 120) is rotated in the θY-direction by the rotary table 137; in the third embodiment, the direction of a cutting edge Ta is aligned with the direction of an inclined surface Wa by rotating a main spindle 10 in the θY-direction (around a θY-axis). A coordinate system in FIG. 7 corresponds to the coordinate system shown in FIGS. 4 to 6.

The machine tool 300 includes the main spindle 10, a tool post 120, a mover 230, and an around-Y-axis rotation driver 212. As in the above embodiments, the main spindle 10 is rotated around an axis AX by a main spindle rotation driver 12 while holding the workpiece W. The main spindle 10 is also disposed so as to be rotatable in the θY-direction around an axis AX2 (around the θY-axis) parallel to the Y-axis. The main spindle 10 is rotated in the θY-direction around the axis AX2 (around the θY-axis) by activating the around-Y-axis rotation driver 212. Thus, the workpiece W is rotated in the θY-direction. The around-Y-axis rotation driver 212 includes, for example, a motor and a transmitter that transmits the rotation of the motor to the main spindle 10 as θY-direction rotation.

The mover 230 has the same configuration as that of the mover 130 of the second embodiment except that it is not provided with a rotary table 137 (see FIG. 4). X'-direction guides 131 are disposed, for example, in a frame (not shown) serving as the cabinet of the machine tool 300. Accordingly, the mover 230 moves the tool post 120 (cutting tool T) in the X'- and Z'-directions.

Operation of the machine tool 300 is approximately similar to that of the second embodiment. First, the main spindle 10 is caused to hold the workpiece W, which is then rotated around the main spindle (around the axis AX) by the main spindle rotation driver 12. Then, the position of the cutting tool T1 in the X-direction is adjusted. In this adjustment, the around-Y-axis rotation driver 212 is activated to move the workpiece W in the θY-direction so that the cutting edge Ta of the cutting tool T corresponds to the inclined surface Wa of the workpiece W. As in the second embodiment, the amount of cutting of the workpiece W is determined by determining the X'-direction position of the cutting edge Ta.

Then, the cutting tool T is moved by activating a Z'-direction driver M6 and a Y-direction driver M3 and thus the inclined surface Wa is cut. In the third embodiment also, as in the second embodiment, the cutting tool T is moved simultaneously in two-axis directions, that is, the Z'-direction and the Y-direction. Thus, the inclined surface Wa can be machined more accurately than when moving the cutting tool T simultaneously in three-axis directions, that is, the X-direction, the Y-direction, and the Z-direction, and movement control can be easily performed. Also, a guide surface 21a properly receives a thrust force F2 acting on the cutting tool T. Thus, as in the second embodiment, during the cutting, inclination of the cutting tool T by reception of the thrust force F2 is suppressed, allowing for high-accuracy machining of the inclined surface Wa.

Although not shown in FIG. 7, the measurement unit 140 shown in FIG. 5(B) may be disposed to measure the inclination angle of the cut inclined surface Wa. In this case, depending on the measurement result of the measurement unit 140, the workpiece W may be further rotated in the θY-direction (around the θY-axis) by activating the around-Y-axis rotation driver 212 and then the inclined surface Wa may be cut again.

As seen above, according to the third embodiment, the main spindle 10 is rotated in the θY-direction. Thus, the direction of the cutting edge Ta can be easily aligned with the direction of the inclined surface Wa without rotating the cutting tool T (tool post 120) in the θY-direction. Also, even if the main spindle 10 is rotated in the θY-direction, the guide surface 21a properly receives the thrust force F2 acting on the cutting tool T. Thus, during the cutting, inclination of the cutting tool T by reception of the thrust force F2 is suppressed, allowing for high-accuracy machining of the inclined surface Wa of the workpiece W.

While the embodiments have been described above, the present invention is not limited thereto. Various changes can be made to the embodiments without departing from the spirit and scope of the invention. Also, the above embodiments may be combined together. For example, the second embodiment and the third embodiment may be combined together. In this case, the amount of cutting of the inclined surface Wa by the cutting edge Ta, the movement direction and the like may be set on the basis of both the position of the cutting tool T determined by the rotation of the rotary table 137 in the θY-direction (around the θY-axis) and the position of the workpiece W (inclined surface Wa) determined by the rotation of the main spindle 10 in the θY-direction (around the θY-axis).

Also, while, in the second and third embodiments, the YZ' plane is defined as a horizontal plane, other configurations may be used. For example, the disposition of the machine tools 200, 300 may be changed so that the axis AX of the main spindle 10 is included in a horizontal plane. In this case, the tool post 120 is disposed in the machine tools 200, 300 so as to be inclined.

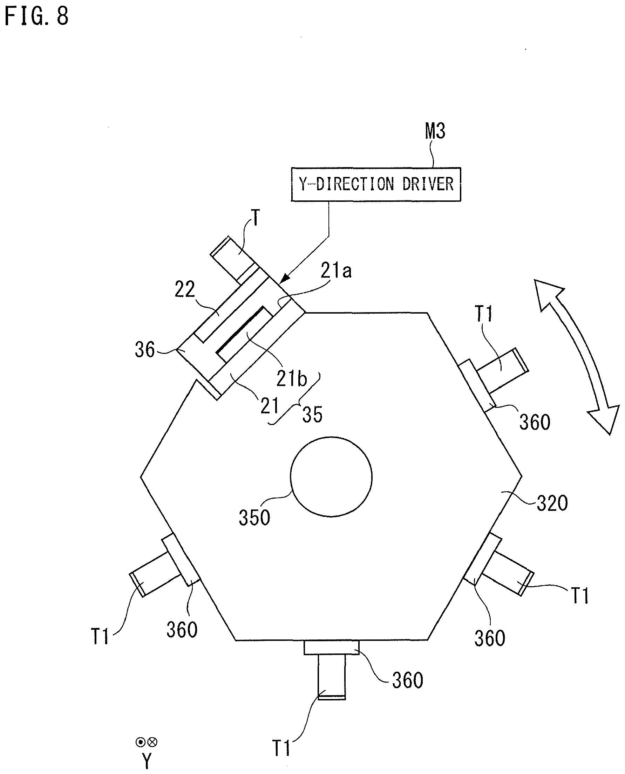

While, in the above embodiments, the single cutting tool T is held by the tool posts 20, 120, other configurations may be used. FIG. 8 is a drawing showing another example of a tool post. As shown in FIG. 8, a turret 320 may be used as a tool post. The turret 320 is in the shape of, for example, a hexagon when seen from the Y-direction and can be rotated around a shaft 350 by activating a rotation driver (not shown). Also, the flat portions of the perimeter of the turret 320 are provided with holders 360 to hold a cutting tool T or the like. All or some of the holders 360 hold cutting tools T1. Accordingly, by rotating the turret 320, the cutting tool T or any cutting tool T1 suitable for the workpiece W can be selected. The cutting tools T1 may include cutting tools, as well as a rotary tool such as a drill or end mill. A rotary tool such as a drill may be rotationally driven by a driving source such as a small motor, housed in the turret 320 or a holder 360.

While, in the above embodiments, the inclined surface Wa is cut from the small diameter portion Wb toward the large diameter portion Wc using the cutting edge Ta of a cutting tool T1 (see FIG. 3), the inclined surface Wa may be cut from the large diameter portion Wc toward the small diameter portion Wb.

While, in the embodiments, the workpiece W is cut by moving the cutting tool T relative to the workpiece W, the workpiece W may be cut in other ways. For example, the workpiece W may be cut by moving the workpiece W (main spindle 10) relative to the cutting tool T. Alternatively, the workpiece W may be cut by moving both the cutting tool T and the workpiece W relative to each other. The contents of Japanese Patent Application No. 2015-249396 and all documents cited in this specification are incorporated herein by reference as a part of the present description to the extent permitted by law.

Description OF Reference Signs

W···workpiece
Wa···inclined surface
T, T1···cutting tool
Ta···cutting edge
F1···feed force
F2···thrust force
S1···tangent plane
S2···-surface
α, β···angle
R, R2, R3···movement direction
AX, AX1, AX2···axis
M1···Z-direction driver
M2···X-direction driver
M3···Y-direction driver
M4···rotary table driver
M5···X'-direction driver
M6···Z'-direction driver
10···main spindle
12···main spindle rotation driver
20, 120···tool post
21···guide base
21a···guide surface
22···holder
30, 130, 230···mover
35···Y-direction guide
36, 136···Y-direction moving object
100, 200, 300···machine tool
137···rotary table
140···measurement unit
212···around-Y-axis rotation driver
320···turret (tool post)

**Claims**

1.  A machine tool for cutting a workpiece having an inclined surface, comprising:

a main spindle that rotates while holding the workpiece;

a tool post that holds a cutting tool to cut the inclined surface of the workpiece; and

a mover that relatively moves the workpiece and the cutting tool in a direction including at least a Y-direction perpendicular to both a Z-direction parallel to an axis of the main spindle and an X-direction that is perpendicular to the Z-direction and determines the amount of cutting of the workpiece, wherein

the mover comprises a Y-direction guide disposed on the tool post, the Y-direction guide guiding movement of the cutting tool in the Y-direction, and

the Y-direction guide has a guide surface along a surface perpendicular to a direction of a thrust force that occurs when cutting the inclined surface using the cutting tool.

2. The machine tool according to Claim 1, wherein the guide surface is parallel to a tangent plane to a linear portion of the inclined surface of the workpiece, the linear portion contacted by the cutting tool.

3. The machine tool according to Claim 1 or 2, wherein the cutting tool is mounted on a Y-direction moving object so that a direction of a cutting edge of the cutting tool is parallel to the guide surface, the Y-direction moving object moving along the Y-direction guide.

4. The machine tool according to any one of Claims 1 to 3, wherein the guide surface is inclined around an axis parallel to the Y-direction and with respect to a YZ-plane parallel to the Y-direction and the Z-direction.

5. A machine tool for cutting a workpiece having an inclined surface, comprising:

a main spindle that rotates while holding the workpiece;

a tool post that holds a cutting tool to cut the inclined surface of the workpiece; and

a mover that relatively moves the workpiece and the cutting tool in a direction including at least a Y-direction perpendicular to both a Z-direction parallel to an axis of the main spindle and an X-direction that is perpendicular to the Z-direction and determines the amount of cutting of the workpiece, wherein

the mover includes a Y-direction guide disposed on the tool post, the Y-direction guide guiding movement of the cutting tool in the Y-direction, and

at least one of the main spindle and the tool post is able to rotate around an axis parallel to the Y-direction so that a guide surface of the Y-direction guide becomes perpendicular to a direction of a thrust force that occurs when cutting the inclined surface using the cutting tool.

6. The machine tool according to Claim 5, comprising a measurement unit that measures an inclination angle of the inclined surface of the workpiece.

7. The machine tool according to any one of Claim 1 to 6, wherein the tool post is a turret that holds a plurality of cutting tools and is able to change one of the cutting tools to another.

8. The machine tool according to any one of Claims 1 to 7, wherein the tool post holds the cutting tool such that the cutting edge of the cutting tool corresponds to the inclined surface of the workpiece with a direction of the cutting edge inclined with respect to the Z-direction when seen from each of the X-direction and the Y-direction.

9. A method for cutting a workpiece having an inclined surface, comprising:

holding the workpiece on a main spindle and rotating the workpiece around the main spindle;

causing a cutting tool held by a tool post to correspond to the inclined surface of the workpiece; and

cutting the inclined surface by moving the cutting tool relative to the workpiece in a direction including at least a Y-direction perpendicular to both a Z-direction parallel to an axis of the main spindle and an X-direction that is perpendicular to the Z-direction and determines the amount of cutting of the workpiece, wherein

the cutting tool is caused to correspond to the inclined surface of the workpiece by rotating at least one of the main spindle and the tool post around an axis parallel to the Y-direction.

10. The cutting method according to Claim 9, comprising:

measuring an inclination angle of the inclined surface after cutting the inclined surface;

making an adjustment to a rotation position of at least one of the main spindle and the tool post depending on a measurement result; and

cutting the inclined surface using the cutting tool after the adjustment.

FIG. 1

# FIG. 2

# FIG. 3

(A)

(B)

(C)

FIG. 4

FIG. 5

(A)

(B)

FIG. 6

(A)

(B)

FIG. 7

300

(θY-AXIS)
AROUND-Y-AXIS
ROTATION DRIVER

MAIN SPINDLE
ROTATION DRIVER

10

12

212

Wa

AX

W

AX2

T

Ta

22

Y-DIRECTION DRIVER

36

M3

21a

120a

133

230

21 21b

134

35

120

133

132a

131

131

132

X'-DIRECTION DRIVER

Z'-DIRECTION DRIVER

M5

M6

FIG. 8

## INTERNATIONAL SEARCH REPORT

| | International application No. |
|---|---|
| | PCT/JP2016/083769 |

**A. CLASSIFICATION OF SUBJECT MATTER**
*B23B5/38*(2006.01)i, *B23B1/00*(2006.01)i, *B23B21/00*(2006.01)i, *B23B25/06*
(2006.01)i, *B23B29/32*(2006.01)i, *B23Q17/20*(2006.01)i

According to International Patent Classification (IPC) or to both national classification and IPC

**B. FIELDS SEARCHED**

Minimum documentation searched (classification system followed by classification symbols)
B23B5/38, B23B1/00, B23B21/00, B23B25/06, B23B29/32, B23Q17/20

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho  1971–2017   Toroku Jitsuyo Shinan Koho   1994–2017

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| A | WO 2015/079836 A1 (Murata Machinery Ltd.), 04 June 2015 (04.06.2015), fig. 1(a) to 2(b), 3(b) & US 2016/0288214 A1 fig. 1A to 2B, 3B & EP 3075473 A1 | 1-10 |
| A | US 4719829 A (SEVASTAKIS GUS), 19 January 1988 (19.01.1988), fig. 1 to 3 (Family: none) | 1-10 |

☒ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 February 2017 (07.02.17) | 14 February 2017 (14.02.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2016/083769

C (Continuation).   DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 131995/1979(Laid-open No. 52602/1981) (Tokyo Shibaura Electric Co., Ltd.), 09 May 1981 (09.05.1981), fig. 1 to 2 (Family: none) | 1-10 |

Form PCT/ISA/210 (continuation of second sheet) (January 2015)

**EP 3 395 483 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015079836 A
- JP 2015249396 A